# FASCICULE DE BREVET EUROPEEN

(11) **EP 0 905 874 B1**
(45) Date de publication et mention de la délivrance du brevet: **14.11.2001**
(21) Numéro de dépôt: 98440203.2
(22) Date de dépôt: 07.09.1998
(51) Int. Cl.: H02P 1/44, H02K 17/32

(54) **Moteur frein du type comportant un moteur asynchrone à condensateur et un frein fonctionnant par manque de courant**
Bremsmotor mit Asynchronmaschine mit Kondensator und Ruhestrombremse
Brake motor comprising an asynchronous motor with capacitor and zero current brake

(30) Priorité: 29.09.1997 FR 9712240
(43) Date de publication de la demande: 31.03.1999
(73) Titulaire: ALIADE, Société Anonyme, 68304 Saint-Louis (FR)
(72) Inventeur: Nassr, Djafar, 68220 Hesingue (FR)
(74) Mandataire: Rhein, Alain

(56) Documents cités:
- FR-A- 2 425 169
- GB-A- 2 206 252

## Description

L'invention a trait à un moteur-frein comportant, d'une part, un moteur asynchrone à condensateur comprenant un rotor et un stator, celui-ci étant pourvu d'un bobinage principal et d'un bobinage secondaire, et, d'autre part, un frein fonctionnant par manque de courant comprenant un plateau mobile monté sur l'axe du rotor et à même de coopérer avec un plateau fixe sous l'action de moyens de rappel élastique, ce moteur frein comportant encore un déviateur de flux magnétique apte à maintenir décollé ledit plateau mobile du frein par rapport au plateau fixe, contre l'action des moyens de rappel élastique, sous l'effet d'un champ statorique.

La présente invention trouvera son application dans le domaine des moteurs asynchrones utilisés en combinaison avec un frein fonctionnant par manque de courant.

En fait, l'on connaît d'ores et déjà des moteurs frein du type décrit ci-dessus notamment au travers des documents FR-A-2.562.348, FR-A-2.275.051 et FR-A-2.724.505.

Plus précisément, dans le premier de ces documents, le moteur asynchrone dont il est question comporte un rotor à cage d'écureuil présentant, au niveau de ses extrémités opposées, des bagues de court-circuit en matière non magnétique conductrice reliées par des conducteurs rotoriques s'étendant longitudinalement. Ce rotor comporte, en outre, une bague intermédiaire de court-circuit, également en matière non magnétique conductrice qui vient, ainsi, séparer le rotor en deux parties. Dans la première partie, le champ radial créé par le courant circulant dans le stator est à l'origine d'un champ rotorique provoquant la rotation de ce rotor. Par contre, dans la seconde partie du rotor, aucun flux magnétique ne peut traverser radialement le rotor en raison d'un évidement cylindrique qui s'étend entre la bague du court-circuit extrême et la bague du court-circuit intermédiaire délimitant cette seconde partie de ce rotor. De plus, le flux ne peut se boucler circulairement en raison des conducteurs rotoriques qui s'étendent, précisément, depuis le diamètre externe jusqu'à cet évidement. Par contre, ladite bague du court-circuit extrême ne s'étend radialement, depuis l'évidement cylindrique, que sur une partie de la section du rotor. Elle laisse ainsi apparaître au niveau de la face radiale de ce dernier, des segments d'anneaux en matière magnétique, plus particulièrement en tôle empilée qui sont disposés en vis à vis de la face radiale du plateau mobile magnétique du frein. Par conséquent, le flux issu du champ radial statorique est dévié axialement en direction de ce plateau mobile du frein qu'il vient attirer contre l'action du ressort précisément disposé dans l'évidement cylindrique dont il a été question plus haut.

En fait, il a été vu que dans une conception de ce type la section de segment d'anneaux magnétiques faisant face au plateau mobile est obligatoirement limitée de sorte que l'on rencontre des problèmes de saturation et de flux de faits importants. En conséquence, cette section des segments magnétiques conditionne le coefficient de raideur du ressort et le diamètre du moteur.

Sur ce il convient de préciser qu'il se pose, à ce niveau, deux problèmes dont les solutions semblent quelque peu antagonistes.

Ainsi, plus la force de rappel du ressort est importante, plus vite interviendra l'arrêt du moteur lors de la coupure du courant. Il en résulte, par ailleurs, un meilleur blocage en rotation de ce moteur. De plus, en limitant, lors du freinage, le frottement entre le plateau mobile et le plateau fixe du frein, il en découle une longévité accrue des garnitures de ce dernier. A ce propos, dans le domaine des volets roulants où il est fait appel à ce type de moteur frein, généralement de forme tubulaire et disposé à l'intérieur de l'arbre d'enroulement du tablier de ce volet roulant, l'usure du frein est l'une des premières raisons d'intervention des services après-vente.

Sur ce il convient encore de préciser que si un ressort à force de rappel élevée améliore l'efficacité du frein à la commande d'arrêt du fonctionnement du moteur, il constitue un handicap pendant la phase du démarrage de ce moteur. En effet, pendant cette phase transitoire de démarrage le flux issu du champ radial statorique et dévié axialement en direction du plateau mobile du frein met un certain temps pour atteindre sa valeur maximale d'où résulte une force de rappel, opposée à celle du ressort, de moindre amplitude. De plus, pendant cette phase de démarrage, il y a lieu, en outre, de vaincre l'inertie correspondant à ce plateau mobile du frein. Il en découle un décollement à retardement dudit plateau mobile par rapport au plateau fixe d'où un frottement et une usure de leur garniture.

Sur ce l'on a tout d'abord envisagé d'améliorer des caractéristiques du moteur afin d'optimiser la force d'attraction du plateau mobile en phase de démarrage. Ainsi, il est décrit, dans les documents FR-A-2.275.051 et FR-A-2.724.505 un moteur frein qui prévoit, entre le plateau mobile du frein et le rotor, un déviateur de flux magnétiquement séparé de ce dernier et de diamètre extérieur au plus égal au diamètre du rotor. Selon le document FR-A-2.275.051, le déviateur de flux comporte un moyeu amagnétique sur le pourtour externe duquel s'étendent, radialement et, longitudinalement, des barreaux amagnétiques définissant des segments magnétiques dont la face radiale, opposée au rotor, est disposée en vis à vis de la face radiale magnétique du plateau mobile du frein. A noter que le stator est prolongé par rapport au rotor de manière à s'étendre, également au moins au-dessus du déviateur de flux et soumettre ce dernier à un champ radial statorique.

Dans le cadre du document FR-A-2.724.505 il est encore prévu de concevoir le moyeu amagnétique et les barreaux amagnétiques de ce déviateur de flux en un matériau amagnétique non conducteur, notamment en un matériau synthétique.

En définitive, si de tels perfectionnements ont permis d'améliorer les performances de frein, ils n'ont pas, pour autant, résolu le problème lié au fonctionnement transitoire d'un moteur-frein. Ainsi, l'inertie au décollement du plateau mobile du frein par rapport au plateau fixe lors du démarrage ou encore celle du rotor lors de la coupure de courant, entraîne un frottement relatif des garnitures de ces plateaux de frein, donc une usure de ce dernier. En conséquence, la longévité d'un tel ensemble moteur-frein est, pour l'heure, strictement dépendante de la longévité des garnitures du frein.

Un dispositif d'assistance au démarrage est décrit dans FR-A-2 425 169.

Aussi, la présente invention se veut à même de répondre au problème précité au travers de dispositifs d'assistance électronique ayant pour fonction d'assurer le décollement du plateau mobile par rapport au plateau fixe avant même qu'intervienne la rotation du rotor du moteur et/ou de maintenir ce plateau mobile décollé du plateau fixe au moment de la commande d'arrêt du moteur pour, préalablement, ralentir, électromagnétiquement, la rotation du rotor.

A cet effet, l'invention concerne un moteur-frein comportant, d'une part, un moteur asynchrone à condensateur comprenant un rotor et un stator, celui-ci étant pourvu d'un bobinage principal et d'un bobinage secondaire et, d'autre part, un frein fonctionnant par manque de courant comprenant un plateau mobile monté sur l'axe du rotor et à même de coopérer avec un plateau fixe sous l'action de moyens de rappel élastique, ce moteur frein comportant encore un déviateur de flux magnétique apte à maintenir décollé ledit plateau mobile du frein par rapport au plateau fixe contre l'action des moyens de rappel élastique sous l'effet d'un champ statorique, caractérisé par le fait qu'il comporte un dispositif d'assistance électronique au décollement du frein en phase de démarrage du moteur-frein consistant en des moyens pour court-circuiter le condensateur et alimenter en phase le bobinage principal et le bobinage secondaire pendant une durée qui est au plus égale à la première demi-période décrite par la tension après l'établissement de cette dernière.

L'invention concerne en outre un moteur-frein comportant, d'une part, un moteur asynchrone à condensateur comprenant un rotor et un stator, celui-ci étant pourvu d'un bobinage principal et d'un bobinage secondaire et, d'autre part, un frein fonctionnant par manque de courant comprenant un plateau mobile monté sur l'axe du rotor et à même de coopérer avec un plateau fixe sous l'action de moyens de rappel élastique, ce moteur frein comportant encore un déviateur de flux magnétique apte à maintenir décollé ledit plateau mobile du frein par rapport au plateau fixe contre l'action des moyens de rappel élastique sous l'effet d'un champ statorique, caractérisé par le fait qu'il comporte un dispositif d'assistance électronique pour maintenir décollé le plateau mobile du frein par rapport au plateau fixe pendant une phase de ralentissement électromagnétique du rotor à la commande d'arrêt de fonctionnement du moteur-frein consistant en des moyens de suppression du champ tournant statorique et de maintien d'au moins un des bobinages sous une tension apte à entraîner un champ statorique non tournant suffisant pour maintenir décollé ledit plateau mobile du frein contre l'action desdits moyens de rappel élastique.

L'invention est avantageuse en ce qu'elle permet de résoudre le problème de frottement du plateau mobile du frein sur le plateau fixe pendant les phases, respectivement, de démarrage et de commande d'arrêt du moteur par une alimentation judicieuse de ce dernier permettant d'assurer, successivement, pendant la phase de démarrage, le décollement du plateau mobile par rapport au plateau fixe et la rotation du rotor, tandis qu'à la commande d'arrêt elle permet de conduire à un freinage électromagnétique de ce rotor avant même que soit relâchée l'action sur le plateau mobile, contraire à celle du rappel du ressort. En conséquence, dans la mesure où le rotor est ralenti voire arrêté, les frottements entre les plateaux mobiles et les plateaux du frein sont considérablement réduits, voire supprimés.

En fait, l'on observera que l'efficacité de tels dispositifs d'assistance électronique, lorsqu'ils sont combinés, permet d'envisager la conception d'un frein dépourvu de garniture de freinage et se présentant, en quelque sorte, sous forme d'un dispositif de blocage mécanique.

Quoi qu'il en soit, il apparaît, de manière évidente, qu'en allongeant la durée de vie du frein au travers de l'invention, on prolonge celle de l'ensemble moteur-frein et donc, on repousse, d'autant, les interventions du service après-vente sur les dispositifs, tels que les volets roulants ou analogues, équipés de tels moteurs frein.

L'invention sera mieux comprise à la lecture de la description qui va suivre se rapportant au dessin joint en annexe et dans lequel :
- la figure 1 est une représentation schématisée d'un exemple de réalisation d'un moteur frein auquel s'applique la présente invention ;
- la figure 2 correspond au schéma fonctionnel d'un moteur électrique asynchrone à condensateur comprenant un bobinage principal et un bobinage secondaire, ceci dans le cadre d'un moteur-frein pourvu d'un dispositif d'assistance électronique au décollement du plateau mobile du frein en phase de démarrage ;
- la figure 3 correspond à un chronogramme illustrant l'évolution de la tension U1 et U2 en fonction du temps dans la phase principale P1 et dans la phase secondaire P2 du moteur, ceci en phase de démarrage ;
- la figure 4 est une représentation similaire à la figure 2 dans le cadre d'un moteur-frein pourvu d'un dispositif d'assistance électronique intervenant en phase de commande d'arrêt dudit moteur ;
- la figure 5 correspond au chronogramme illustrant l'évolution de la tension U1, U2 dans la phase principale P1 et dans la phase secondaire P2 du moteur lors de la commande d'arrêt de ce dernier.

La présente invention concerne un moteur-frein tel que connu dans l'état de la technique, notamment au travers des documents FR-A-2.562.348, FR-A-2.275.051 et FR-A-2.724.505.

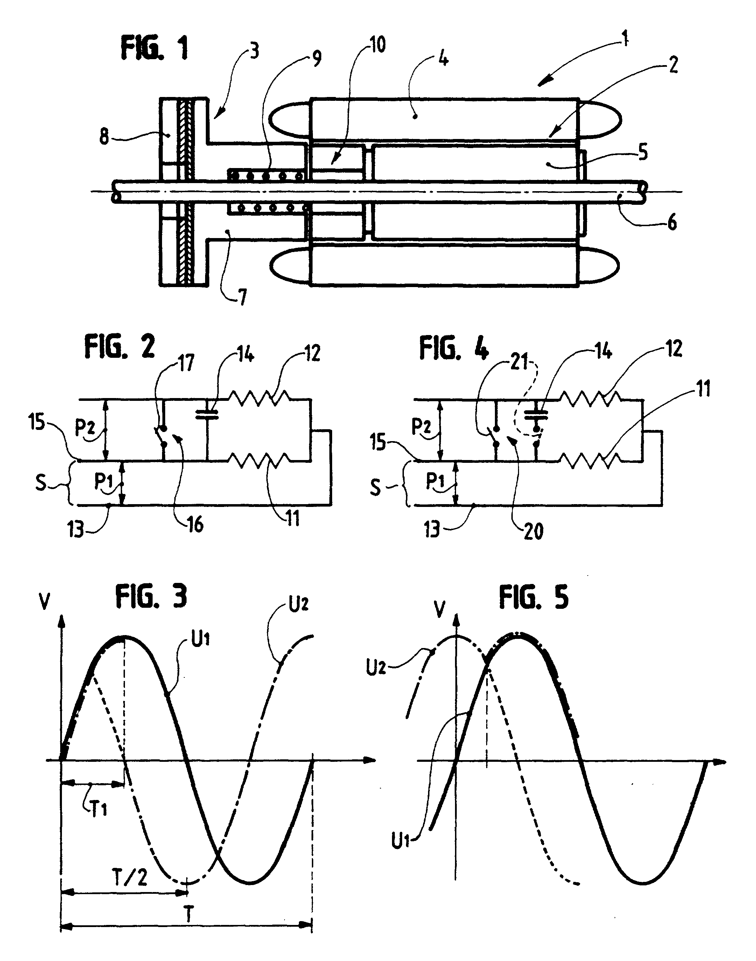

Ainsi, tel que représenté dans la figure 1, ce moteur frein 1 comporte, d'une part, un moteur asynchrone monophasé 2 à condensateur qui est par ailleurs schématisé dans la figure 2, ce moteur-frein 1 comportant, en outre, un frein 3 fonctionnant par manque de courant.

Plus précisément, le moteur asynchrone 2 est muni d'un stator 4 et d'un rotor à cage d'écureuil 5, tandis que sur l'axe 6 de ce dernier est monté, mobile axialement, le plateau mobile 7 correspondant au frein 3, et qui est à même de coopérer avec un plateau fixe 8 sous l'action d'un ressort 9.

De plus, entre le plateau mobile 7 du frein 3 et le rotor 5 est implanté un déviateur de flux 10 au-dessus duquel s'étend le stator 4. Ainsi, si le champ radial créé par le courant circulant dans le stator 4 est à l'origine d'un champ rotorique provoquant la rotation de ce dernier, le flux magnétique résultant de ce stator, ne peut traverser, radialement, le déviateur de flux 10, ni même se boucler circulairement au niveau de ce dernier de sorte qu'il est dévié axialement en direction du plateau mobile 7 du frein 3 qu'il vient attirer contre l'action du ressort 9 dès l'instant que le courant est établi au niveau de ce moteur-frein 1. Bien entendu, la coupure de courant et l'absence de ce flux magnétique entraîne le relâchement du plateau mobile 7 qui vient alors s'appuyer contre le plateau fixe 8.

Tel que visible, plus particulièrement, dans la figure 2, un tel moteur asynchrone monophasé 2 à condensateur comporte un bobinage principal 11 et un bobinage secondaire 12, d'une part, raccordés au commun 13 du secteur S et, d'autre part, reliés entre eux par un condensateur de déphasage 14 à même de créer le champ tournant pour la commande en rotation du rotor 5. A noter, à ce propos, que le bobinage principal 11 est encore raccordé à la borne 15 du secteur S correspondant à la phase principale P1, tandis que le raccordement du bobinage secondaire 12 définit la phase auxiliaire P2.

Conformément à l'invention, un tel moteur frein 1 peut être équipé d'un dispositif 16 d'assistance électronique au décollement du frein 3 en phase de démarrage de ce moteur 1. Un tel dispositif 16 consiste en fait en des moyens 17 pour court-circuiter le condensateur 14 et alimenter en phase le bobinage principal 11 et le bobinage secondaire 12 du moteur 2 pendant une durée T1 qui est au plus égale à la première demi-période T/2 décrite par la tension secteur S dans ladite phase principale P1 suivant la commande de démarrage.

A noter que les moyens 17 pour court-circuiter ce condensateur 14 peuvent se présenter sous forme d'un interrupteur du type bidirectionnel à transistor MOS ou IGBT ou bipolaire préférentiellement associé à des moyens de contrôle du temps de commutation, du type DRIVER, à même de prolonger ce temps de commutation.

Ainsi, tel que visible sur le chronogramme de la figure 3, en maintenant, durant la phase initiale de démarrage du moteur 2, le condensateur 14 en position court-circuitée, le bobinage principal 11 et le bobinage secondaire 12 sont alimentés en phase de sorte que les champ statoriques qui en résultent s'additionnent conduisant à un flux magnétique maximum dans le déviateur de flux. A ce moment là le plateau mobile du frein 7 subit une attraction maximale permettant de vaincre son inertie et celle du ressort 9.

Préférentiellement, le rétablissement du déphasage et, donc, l'ouverture des moyens 17 servant à court-circuiter le condensateur 14 intervient avant que la tension U1, U2 dans les phases principales P1 et auxiliaire P2 ne retombe à une valeur d'où résulte un champ statorique donc un flux magnétique insuffisant pour empêcher le plateau mobile 7 du frein 3 de retomber en direction du plateau fixe 8.

Aussi, selon un mode de réalisation préférentiel, la durée T1 pendant laquelle on maintient le condensateur 14 en court-circuit est au plus égale au quart de la période T du signal alternatif décrit par la tension U1 dans ladite phase principale P1 au moment de la mise sous tension du moteur 2 de manière que les champs produits par le bobinage principal 11 et le bobinage secondaire 12 soient en quadrature. La résultante de ces champs est en fait égale à celle du bobinage principal 11 dans la mesure où la tension U2 dans la phase auxiliaire passe par 0. Par la suite et en raison du déphasage, cette résultante du champ tournant produit par le bobinage principal 11 et le bobinage secondaire 12 permet de maintenir, au niveau du déviateur de flux 10, un flux magnétique suffisant pour éviter que le plateau mobile 7 du frein 3 ne retombe.

Finalement et tel que visible sur la figure 3, la durée T1 du maintien en court-circuit du condensateur 14 peut encore être légèrement plus courte de sorte que le rétablissement du déphasage intervienne durant la phase ascendante de la tension U1 dans la phase principale P1 de manière à pallier à l'inertie au déphasage dans la phase auxiliaire P2 liée au temps de charge du condensateur 14.

Conformément à l'invention ce moteur frein 1 peut encore être équipé d'un dispositif d'assistance électronique 20 pour maintenir décollé le plateau mobile 7 du frein 3 par rapport au plateau fixe pendant une phase de ralentissement électromagnétique, de la rotation du rotor 5 lors de la commande d'arrêt de fonctionnement du moteur-frein. Un tel dispositif 20 consiste, en particulier, en des moyens 21 de suppression du champ tournant statorique et de maintien d'au moins un des bobinages sous une tension apte à conduire à un champ statorique non tournant suffisant pour maintenir décollé ledit plateau mobile 7 du frein 3 contre l'action desdits moyens de rappel élastique 9. Ainsi, lesdits moyens 21 sont conçus aptes, soit à couper l'alimentation d'une des bobines 11, 12, soit à assurer l'alimentation en phase de ces dernières au travers d'une mise en court-circuit du condensateur 14 à un instant t déterminé. Finalement de tels moyens 21 peuvent, là encore, se présenter sous forme d'un interrupteur de technologie similaire à celui dont il a été question plus haut.

Il convient d'observer que selon un autre mode de réalisation, les moyens 21 notamment destinés à supprimer le champ tournant au niveau du moteur 2 peuvent consister en des moyens de redressement de la tension traversant le bobinage principal 11 et le bobinage secondaire 12 d'où résulte un champ statorique sensiblement constant et, en conséquence, un flux magnétique au niveau du déviateur de flux qui, le temps nécessaire à l'arrêt du rotor 5, est apte à maintenir le plateau mobile 7 décollé par rapport au plateau fixe 8.

Préférentiellement, l'instant t de la commande de suppression du champ tournant dans le moteur 2 est choisi à un moment où le champ résultant, soit de la seule bobine encore alimentée ultérieurement, soit des deux bobines en phase suite au court-circuit du condensateur 14, tend à croître, tout en respectant, bien sûr, la condition ci-dessus. Ainsi, au moment de la suppression du champ tournant, ce champ résultant doit être dans tous les cas suffisant pour maintenir décollé ledit plateau mobile 7 du frein 3 contre l'action des moyens de rappel élastique 9.

Finalement l'invention concerne un moteur frein intégrant les deux dispositifs d'assistance électronique 16 et 20 précédemment décrits.

L'on comprend, évidemment qu'en venant décoller le frein, avant même que tourne le rotor du moteur et/ou si l'on arrête, tout d'abord ce rotor avant de relâcher le frein il n'y a plus guère de frottement des garnitures de ce dernier et sa longévité est accrue. En outre, cela permet d'envisager un frein 3 dont le plateau mobile 7, lorsqu'il coopère avec le plateau fixe 8, conduit à un blocage mécanique de la rotation du moteur frein 1. Tout particulièrement, ce plateau mobile 7 peut être pourvu d'une denture quelconque destinée à venir s'immobiliser dans une denture de forme conjuguée au niveau du plateau fixe 8 du frein 3.

Un tel blocage mécanique procure, bien entendu, bon nombre d'avantages du point de vue de la sécurité des ouvrants motorisés au moyen d'un tel frein 1.

Tout particulièrement, il a été observé que le blocage procuré par un frein à garniture n'était que relatif puisqu'une série de chocs successifs sur un tel ouvrant permettait souvent, d'obtenir un déplacement relatif du plateau mobile de frein par rapport au plateau fixe et, en conséquence, un léger déplacement de cet ouvrant par rapport à son cadre dormant. Or, un ouvrant mal refermé sur son cadre dormant, est particulièrement vulnérable puisqu'il permet la prise au moyen d'un outil du type pied de biche ou analogue.

En conclusion, en prenant toutes les dispositions pour solliciter le moins possible le frein d'un moteur-frein tel qu'il en est utilisé dans le domaine de la motorisation d'ouvrants du type porte, fenêtre, volet ou analogue, l'invention a, non seulement, su répondre à un problème de longévité de ces moteurs-freins, mais elle a également su apporter une solution au manque de sécurité qui en découle usuellement.

## Revendications

1. Moteur-frein comprenant, d'une part, un moteur asynchrone (2) à condensateur (14) comprenant un rotor (5) et un stator (4), celui-ci étant pourvu d'un bobinage principal (11) et d'un bobinage secondaire (12) et, d'autre part, un frein (3) fonctionnant par manque de courant comprenant un plateau mobile (7) monté sur l'axe (6) du rotor (5) et à même de coopérer avec un plateau fixe 8 sous l'action de moyens de rappel élastiques (9), ce moteur frein comportant encore un déviateur de flux magnétique (10) apte à maintenir décollé ledit plateau mobile (7) du frein (3) par rapport au plateau fixe (8) contre l'action des moyens de rappel élastique (9) sous l'effet d'un champ statorique, **caractérisé par le fait qu'**il comporte un dispositif d'assistance électronique (16) au décollement du frein (3) en phase de démarrage du moteur frein (1) consistant en des moyens (17) pour court-circuiter le condensateur (14) et alimenter en phase le bobinage principal (11) et le bobinage secondaire (12) pendant une durée (T1) qui est au plus égale à la demi-période (T/2) décrite par la tension après l'établissement de cette dernière.

2. Moteur-frein selon la revendication 1, **caractérisé par le fait que** la durée (T1) pendant laquelle on maintient le condensateur (14) en court-circuit est au plus égale au quart de la période (T) du signal alternatif décrit par la tension dans la phase principale (P1) du moteur asynchrone (2) à condensateur (14) au moment de la mise sous tension de ce dernier.

3. Moteur-frein selon l'une quelconque des revendications 1 et 2, **caractérisé par le fait que** la durée (T1) du maintien en court-circuit du condensateur (14) par l'intermédiaire des moyens (17) est définie de sorte que le rétablissement du déphasage entre la phase principale (P1) et la phase auxiliaire (P2) du moteur asynchrone (2) à condensateur (14) intervienne durant la phase ascendante de la tension (U1) dans la phase principale (P1) de manière à pallier à l'inertie au déphasage de la phase auxiliaire (P2) liée au temps de charge du condensateur (14).

4. Moteur-frein comportant, d'une part, un moteur asynchrone (2) à condensateur (14) comprenant un rotor (5) et un stator (4) celui-ci étant pourvu d'un bobinage principal (11) et un bobinage secondaire (12) et, d'autre part, un frein (3) fonctionnant par manque de courant comprenant un plateau mobile (7) monté sur l'axe (6) du rotor (5) et à même de coopérer avec un plateau fixe (8) sous l'action de moyens de rappel élastique (9), ce moteur-frein (1) comportant encore un déviateur de flux magnétique (10) apte à maintenir décollé ledit plateau mobile (7) du frein (3) par rapport au plateau fixe (8) contre l'action des moyens de rappel élastique (9) sous l'effet d'un champ statorique, **caractérisé par le fait qu'**il comporte un dispositif d'assistance (20) pour maintenir décollé le plateau mobile (7) du frein (3) par rapport au plateau fixe (8) pendant une phase de ralentissement électromagnétique du rotor (5) à la commande d'arrêt de fonctionnement du moteur-frein (1), consistant en des moyens (21) de suppression du champ tournant statorique et de maintien d'au moins un des bobinages (11, 12) sous une tension apte à entraîner un champ statorique non tournant suffisant pour maintenir décollé ledit plateau mobile (7) du frein (3) contre l'action desdits moyens de rappel élastique (9).

5. Moteur-frein selon la revendication 4, **caractérisé par le fait que** les moyens (21) sont conçus aptes soit à couper l'alimentation d'une des bobines principale (11) ou secondaire (12), soit à assurer l'alimentation en phase de ces dernières au travers d'une mise en court-circuit du condensateur (14) à un instant (t) déterminé.

6. Moteur-frein selon la revendication 4, **caractérisé par le fait que** les moyens (21) consistent en des moyens de redressement de la tension traversant le bobinage principal (11) et le bobinage secondaire (12) en vue de créer un champ statorique sensiblement constant et un flux magnétique, au niveau du déviateur de flux magnétique (10), qui, le temps nécessaire à l'arrêt du rotor (5) est apte à maintenir le plateau mobile (7) décollé par rapport au plateau fixe (8).

7. Moteur-frein selon la revendication 5, **caractérisé par le fait que** l'instant (t) de la commande de suppression du champ tournant dans le moteur asynchrone (2) à condensateur (14) est choisi à un moment où le champ résultant, soit de la seule bobine alimentée ultérieurement, soit des deux bobines (11, 12) en phase suite au court-circuit du condensateur (14), tend à croître tout en étant suffisant pour maintenir décollé le plateau mobile (7) du frein (3) contre l'action des moyens de rappel élastique (9).

8. Moteur-frein selon les revendications 1 et 4, **caractérisé par le fait qu'**il comporte, en combinaison, un dispositif d'assistance électronique (16) au décollement du frein (3) en phase de démarrage du moteur frein (1) selon la revendication 1 et un dispositif d'assistance électronique (20) pour maintenir décollé le plateau mobile (7) du frein (3) par rapport au plateau fixe (8) pendant une phase de ralentissement électromagnétique de la rotation du rotor (5) lors de la commande d'arrêt du fonctionnement dudit moteur-frein (1) selon la revendication 4.

## Patentansprüche

1. Bremsmotor umfassend, einerseits, einen Asynchronmotor (2) mit Kondensator (14), der einen Rotor (5) und einen Stator (4) umfaßt, wobei dieser letzter mit einer Hauptwicklung (11) und einer Sekundärwicklung (12) versehen ist, und, andererseits, eine Ruhestrombremse (3), die eine auf der Achse (6) des Rotors (5) montierte bewegliche Scheibe (7) umfaßt, geeignet, unter der Wirkung elastischer Rückstellmittel (9) mit einer festen Scheibe (8) zusammenzuwirken, wobei dieser Bremsmotor ebenfalls einen Magnetstromablenker (10) umfaßt, geeignet, die genannte bewegliche Scheibe (7) der Bremse (3) unter dem Einfluß eines Statorfeldes der Wirkung der elastischer Rückstellmittel (9) entgegen von der festen Scheibe (8) losgelöst zu halten, **dadurch gekennzeichnet, daß** er eine elektronische Hilfsvorrichtung (16) umfaßt, um die Bremse (3) während der Startphase des Bremsmotors (1) losgelöst zu halten, welche aus Mitteln (17) zum Kurzschließen des Kondensators (14) und zum Speisen in der Phase der Hauptwicklung (11) und der Sekundärwicklung (12) während einer Periode (T1), die höchstens gleich der von der Spannung nach Anbringen derselben beschriebenen halben Periode (T/2) ist, besteht.

2. Bremsmotor nach Anspruch 1, **dadurch gekennzeichnet, daß** die Periode (T1), während der der Kondensator (14) kurzgeschlossen gehalten wird, höchstens gleich einem Viertel der Periode (T) des von der Spannung während der Hauptphase (P1) des Asynchronmotors (2) mit Kondensator (14) bei der Unterspannungsetzung dieses letzten beschriebenen Wechselsignals ist.

3. Bremsmotor nach irgendeinem der Ansprüche 1 und 2, **dadurch gekennzeichnet, daß** die Periode (T1), während der der Kondensator (14) über die Mittel (17) kurzgeschlossen gehalten wird, so definiert ist, daß die Wiederzustandebringung der Phasenverschiebung zwischen der Hauptphase (P1) und der Hilfsphase (P2) des Asynchronmotors (2) mit Kondensator (14) während der steigende Phase der Spannung (U1) in der Hauptphase (P1) erfolgt, sodaß die mit der Ladungszeit des Kondensators (14) verbundene Trägheit bei der Phasenverschiebung der Hilfsphase (P2) behoben wird.

4. Bremsmotor umfassend, einerseits, einen Asynchronmotor (2) mit Kondensator (14), der einen Rotor (5) und einen Stator (4) umfaßt, wobei dieser letzter mit einer Hauptwicklung (11) und einer Sekundärwicklung (12) versehen ist, und, andererseits, eine Ruhestrombremse (3), die eine auf der Achse (6) des Rotors (5) montierte bewegliche Scheibe (7) umfaßt, geeignet, unter der Wirkung elastischer Rückstellmittel (9) mit einer festen Scheibe (8) zusammenzuwirken, wobei dieser Bremsmotor ebenfalls einen Magnetstromablenker (10) umfaßt, geeignet, die genannte bewegliche Scheibe (7) der Bremse (3) unter dem Einfluß eines Statorfeldes der Wirkung der elastischer Rückstellmittel (9) entgegen von der festen Scheibe (8) losgelöst zu halten, **dadurch gekennzeichnet, daß** er eine Hilfsvorrichtung (20) umfaßt, um die bewegliche Scheibe (7) der Bremse (3) während einer elektromagnetischen Verlangsamungphase des Rotors (5) beim Anhalten des Betriebs des Bremsmotors (1) von der festen Scheibe (8) losgelöst zu halten, welche aus Mitteln (21), um das drehende Statorfeld zu unterdrücken und wenigstens eine der Wicklungen (11, 12) unter einer Spannung zu halten, geeignet, ein ausreichendes nichtdrehendes Statorfeld zustandezubringen, um die genannte bewegliche Scheibe (7) der Bremse (3) der Wirkung der genannten elastischen Rückstellmittel (9) entgegen losgelöst zu halten.

5. Bremsmotor nach Anspruch 4, **dadurch gekennzeichnet, daß** die Mittel (21) so vorgesehen sind, daß sie geeignet sind, entweder die Stromzufuhr zu einer der Haupt(11) oder Sekundärwicklungen (12) zu unterbrechen oder diese letzten in der Phase zu speisen, indem den Kondensator (14) zu einer bestimmten Zeit (t) kurzgeschlossen wird.

6. Bremsmotor nach Anspruch 4, **dadurch gekennzeichnet, daß** die Mittel (21) aus Mitteln bestehen, um die Spannung, die durch die Hauptwicklung (11) und die Sekundärwicklung (12) fließt, gleichzurichten, um im Bereich des Magnetstromablenkers (10) ein im wesentlichen konstantes Statorfeld und einen Magnetstrom zu erzeugen, der geeignet ist, während der zum Anhalten des Rotors (5) erforderlichen Zeit die bewegliche Scheibe (7) von der festen Scheibe (8) losgelöst zu halten.

7. Bremsmotor nach Anspruch 5, **dadurch gekennzeichnet, daß** der Zeitpunkt (t) zur Steuerung der Unterdrückung des Drehfeldes im Asynchronmotor (2) mit Kondensator (14) zu einem Zeitpunt gewählt ist, wenn das Feld, das sich entweder aus der einzigen, später gespeisten Wicklung oder aus beiden, zufolge des Kurzschlußes des Kondensators (14) in der Phase gespeisten Wicklungen (11, 12) ergibt, dazu neigt, zuzunehmen, während es ausreicht, um die bewegliche Scheibe (7) der Bremse der Wirkung der elastischen Rückstellmittel (9) entgegen losgelöst zu halten.

8. Bremsmotor nach Ansprüchen 1 und 4, **dadurch gekennzeichnet, daß** er in Kombintion eine elektronische Hilfsvorrichtung (16), um die Bremse (3) während der Startphase des Bremsmotors (1) losgelöst zu halten, nach Anspruch 1, und eine Hilfsvorrichtung (20), um die bewegliche Scheibe (7) der Bremse (3) während einer elektromagnetischen Verlangsamungphase des Rotors (5) beim Anhalten des Betriebs des Bremsmotors (1) von der festen Scheibe (8) losgelöst zu halten, nach Anspruch 4, umfaßt.

## Claims

1. Brake motor comprising, on the one hand, an asynchronous motor (2) with capacitor (14) including a rotor (5) and a stator (4), the latter being provided with a main coiling (11) and a secondary coiling (12) and, on the other hand, a zero-current brake (3) including a movable plate (7) mounted on the spindle (6) of the rotor (5) and capable of co-operating with a fixed plate (8) under the action of springy restoring means (9), this brake motor including also a magnetic flux deflector (10) capable of keeping said movable plate (7) of the brake (3) separated from the fixed plate (8) against the action of the springy restoring means (9) under the influence of a stator field, **characterised in that** it includes an electronic device (16) for assisting the separation of the brake (3) during the starting phase of the brake motor (1), comprised of means (17) for short-circuiting the capacitor (14) and feeding in phase the main coiling (11) and the secondary coiling (12) for a period (T1) that is at most equal to the half period (T/2) described by the voltage after applying same.

2. Brake motor according to claim 1, **characterised in that** the period (T1) during which the capacitor (14) is maintained short-circuited is at most equal to one fourth of the period (T) of the alternating signal described by the voltage during the main phase (P1) of the asynchronous motor (2) with capacitor (14) at the putting under voltage of the latter.

3. Brake motor according to any of claims 1 and 2, **characterised in that** the period (T1) of maintaining the capacitor (14) short-circuited through the means (17) is so defined that the restoring of the phase shift between the main phase (P1) and the auxiliary phase (P2) of the asynchronous motor (2) with capacitor (14) occurs during the ascending phase of the voltage (U1) in the main phase (P1), so as to mitigate the inertia at the phase shift of the auxiliary phase (P2) in connection with the loading time of the capacitor (14).

4. Brake motor comprising, on the one hand, an asynchronous motor (2) with capacitor (14) including a rotor (5) and a stator (4), the latter being provided with a main coiling (11) and a secondary coiling (12) and, on the other hand, a zero-current brake (3) including a movable plate (7) mounted on the spindle (6) of the rotor (5) and capable of co-operating with a fixed plate (8) under the action of springy restoring means (9), this brake motor (1) including also a magnetic flux deflector (10) capable of keeping said movable plate (7) of the brake (3) separated from the fixed plate (8) against the action of the springy restoring means (9) under the influence of a stator field, **characterised in that** it includes a device (20) for assisting in keeping the movable plate (7) of the brake (3) separated from the fixed plate (8) during an electromagnetic slow-down phase of the rotor (5) when stopping the operation of the brake motor (1), comprised of means (21) for suppressing the rotating stator field and maintaining at least one of the coils (11, 12) under a voltage capable of causing a sufficient nonrotating stator field for keeping separated said movable plate (7) of the brake (3) against the action of said springy restoring means (9).

5. Brake motor according to claim 4, **characterised in that** the means (21) are so designed as to be capable of either interrupting the current supply to one of the main (11) or secondary (12) coilings or feeding in phase the latter through short-circuiting the capacitor (14) at a determined moment (t).

6. Brake motor according to claim 4, **characterised in that** the means (21) are comprised of means for rectifying the voltage passing through the main coiling (11) and the secondary coiling (12), in order to create a substantially constant stator field and a magnetic flux, at the level of the magnetic-flux deflector (10), that, for the time necessary for the rotor (5) to stop, is capable of maintaining the movable plate (7) separated from the fixed plate (8).

7. Brake motor according to claim 5, **characterised in that** the moment (t) for controlling the suppression of the rotating field in the asynchronous motor (2) with capacitor (14) is chosen at a time when the field resulting either from the only coiling fed afterwards or from both coilings (11, 12) in phase pursuant to the short-circuiting of the capacitor (14) tends to increase, while being sufficient for keeping separated the movable plate (7) of the brake (3) against the action of the springy restoring means (9).

8. Brake motor according to claims 1 and 4, **characterised in that** it includes, in combination, an electronic device (16) for assisting the separation of the brake (3) during the starting phase of the brake motor (1) according to claim 1 and a device (20) for assisting in keeping the movable plate (7) of the brake (3) separated from the fixed plate (8) during an electromagnetic slow-down phase of the rotor (5) when stopping the operation of the brake motor (1) according to claim 4.
